# EUROPÄISCHE PATENTSCHRIFT

(11) **EP 2 774 720 B1**
(45) Veröffentlichungstag und Bekanntmachung des Hinweises auf die Patenterteilung: **23.08.2017**
(21) Anmeldenummer: 14156888.1
(22) Anmeldetag: 26.02.2014
(51) Int. Cl.: B23Q 11/10, G05B 19/00

(54) **Werkzeugmaschine mit einer Kühlschmierstoffversorgungsanlage und Verfahren zum Betreiben einer solchen Werkzeugmaschine.**
Machine tool with a coolant and lubricant supply device and method therefor
Machine-outil avec dispositif d'alimentation de liquide de refroidissement et lubrifiant, et procédé pour celle-ci

(30) Priorität: 04.03.2013 DE 102013203670
(43) Veröffentlichungstag der Anmeldung: 10.09.2014
(73) Patentinhaber: Index-Werke GmbH & Co. KG Hahn & Tessky, 73730 Esslingen (DE)
(72) Erfinder: Stark, Ralf Thomas, 73110 Hattenhofen (DE); Neumann, Holger, 73765 Neuhausen (DE); Staiger, Sven, 73728 Esslingen (DE); Beck, Eberhard, 73773 Aichwald (DE)
(74) Vertreter: Hoeger, Stellrecht & Partner Patentanwälte mbB

(56) Entgegenhaltungen:
- EP-A1- 2 502 700
- WO-A1-2013/065097
- DE-U1-202011 052 171
- US-A1- 2003 147 708

## Beschreibung

Die Erfindung betrifft eine Werkzeugmaschine umfassend einen Arbeitsraum, in welchem ein Werkstückträger zur Aufnahme eines Werkstücks sowie mindestens ein Werkzeugträger mit mindestens einem Werkzeug angeordnet und relativ zueinander bewegbar sind, sowie umfassend eine Kühlschmierstoffversorgungsanlage für den Arbeitsraum mit einem Kühlschmierstoffreservoir, mit einem Kühlschmierstoffverteilsystem und mit einer drehzahlsteuerbaren Kühlschmierstoffpumpe, welche saugseitig mit dem Kühlschmierstoffreservoir und druckseitig mit dem Kühlschmierstoffverteilsystem verbunden ist.

Derartige Werkzeugmaschinen sind aus dem Stand der Technik bekannt, wie z.B aus der DE 20 2011 052 171 U.

Bei den bislang bekannten Werkzeugmaschinen arbeitet die Kühlschmierstoffversorgungsanlage nicht energieoptimiert.

Der Erfindung liegt daher die Aufgabe zugrunde, eine Werkzeugmaschine mit einer energieoptimierten Kühlschmierstoffversorgungsanlage zur Verfügung zu stellen.

Diese Aufgabe mittels einer Werkzeugmaschine gemäß Anspruch 1 und ein Verfahren gemäß Anspruch 5 gelöst. Der Vorteil der erfindungsgemäßen Lösung ist darin zu sehen, dass diese die Möglichkeit eröffnet, ohne einen ständigen Rücklauf aus dem Kühlschmierstoffverteilsystem in das Kühlschmierstoffreservoir, den Druck in dem Kühlschmierstoffverteilsystem auf den vorgegebenen Referenzdruck zu regeln und dabei energieeffizient arbeitet, da nur die Kühlschmierstoffmenge, die von dem Kühlschmierstoffverteilsystem zur Kühlung und Schmierung von Bearbeitungsprozessen im Arbeitsraum benötigt wird, dem Kühlschmierstoffverteilsystem zugeführt und der hierzu erforderliche Druck im Kühlschmierstoffverteilsystem aufrecht erhalten wird.

Besonders energieeffizient ist die erfindungsgemäße Werkzeugmaschine weil die Druckregelung im Regelbereich die Drehzahl ausschließlich auf der Basis des vom Drucksensor gemessenen Drucks steuert, um diesen auf den Referenzdruck zu regeln.

Hinsichtlich des Regelbereichs wurden bislang keine näheren Angaben gemacht.

Vorzugsweise ist dabei vorgesehen, dass der Regelbereich durch den Druck im Kühlschmierstoffverteilsystem und die Drehzahl der Kühlschmierstoffpumpe definiert ist, so dass durch diese beiden Größen erfassbar ist, ob die Druckregelung innerhalb des Regelbereichs arbeitet oder außerhalb desselben. Insbesondere ist vorgesehen, dass eine Drehzahluntergrenze des Regelbereichs durch eine Mindestdrehzahl der Kühlschmierstoffpumpe definiert ist, wobei die Mindestdrehzahl insbesondere durch die Auslegung und den Aufbau der Kühlschmierstoffpumpe vorgegeben ist.

Ferner ist vorzugsweise vorgesehen, dass eine Drehzahlobergrenze des Regelbereichs durch eine Maximaldrehzahl für Dauerbetrieb der Kühlschmierstoffpumpe definiert ist, mit welcher diese beschädigungsfrei während ihrer Lebensdauer betrieben werden kann.

Insbesondere ist vorteilhafterweise vorgesehen, dass die Druckregelung innerhalb des Regelbereichs im Druckregelmodus arbeitet und dass der Betriebsmodus der Druckregelung bei einem Überschreiten der Maximaldrehzahl oder einem Unterschreiten der Mindestdrehzahl von dem Druckregelmodus in einen Drehzahlbegrenzungsmodus übergeht und die Drehzahl der Kühlschmierstoffpumpe entweder auf die Maximaldrehzahl begrenzt, so dass diese die Maximaldrehzahl nicht überschreiten kann oder auf die Mindestdrehzahl begrenzt, so dass diese die Mindestdrehzahl nicht unterschreiten kann und dann, wenn die gemäß der Druckregelung geforderte Drehzahl wieder im Regelbereich liegt, wieder von dem Drehzahlbegrenzungsmodus auf den Druckregelmodus umschaltet.

Es ist jedoch nicht zwingend erforderlich, die Maximaldrehzahl für Dauerbetrieb streng einzuhalten und den Regelbereich auf Drehzahlen unterhalb der Maximaldrehzahl für Dauerbetrieb zu limitieren.

Aus diesem Grund ist bei einer vorteilhaften Lösung vorgesehen, dass sich der Regelbereich über die Maximaldrehzahl für Dauerbetrieb hinaus erstreckt, wenn die gemäß der Regelung erforderliche Drehzahl der Kühlschmierstoffpumpe die Maximaldrehzahl für Dauerbetrieb für einen festgelegten Überlastzeitraum überschreitet.

Damit besteht die Möglichkeit, die Kühlschmierstoffpumpe auch bei Drehzahlen über der Maximaldrehzahl für Dauerbetrieb für einen begrenzten Zeitraum betreiben zu können, wobei der Überlastzeitraum derart begrenzt ist, dass die Kühlschmierstoffpumpe während dieses Zeitraums beschädigungsfrei über der Maximaldrehzahl für Dauerbetrieb betrieben werden kann.

Um jedoch in all den Fällen, in denen die Drehzahl der Kühlschmierstoffpumpe während eines auf den den festgelegten Überlastzeitraum folgenden Zeitraums über der Maximaldrehzahl für Dauerbetrieb liegen würde, einen definierten Betriebsmodus vorzugeben, ist vorzugsweise vorgesehen, dass die Druckregelung nach Ablauf des festgelegten Überlastzeitraums den Regelbereich auf die Maximaldrehzahl für Dauerbetrieb begrenzt.

Das heißt, dass in diesem Fall die Druckregelung innerhalb des Regelbereichs bis zur Maximaldrehzahl für Dauerbetrieb im Druckregelmodus arbeitet, jedoch dann, wenn die Regelung eine höhere Drehzahl als die Maximaldrehzahl für Dauerbetrieb erfordern würde, in dem Drehzahlbegrenzungsmodus die Drehzahl auf die Maximaldrehzahl für Dauerbetrieb so lange begrenzt hält, bis die Regelung wieder eine unterhalb der Maximaldrehzahl für Dauerbetrieb liegende Drehzahl fordert, so dass dann wiederum in vollem Umfang die Druckregelung im Druckregelmodus zur Verfügung steht.

Bei einem Aussetzen der Regelung und lediglich einen Betrieb der Kühlschmierstoffpumpe mit der Maximaldrehzahl für Dauerbetrieb im Drehzahlbegrenzungsmodus stellt sich auch der Druck im Kühlschmierstoffverteilsystem entsprechend dem Druck ein, der mit der Maximaldrehzahl für Dauerbetrieb der Kühlschmierstoffpumpe bei dem gegebenen Bedarf an Kühlschmierstoff erreichbar ist.

Die erfindungsgemäße Lösung schafft somit die Möglichkeit, die Kühlschmierstoffversorgungsanlage energieoptimiert zu betreiben, nämlich in einem rücklauffreien energieoptimalen Betriebsmodus, in welchem keinerlei Kühlschmierstoff aus dem Kühlschmierstoffverteilsystem durch eine direkte Rücklaufleitung oder Bypassleitung in das Kühlschmierstoffreservoir geführt wird.

In diesem energieoptimierten Betriebsmodus der Kühlschmierstoffversorgungsanlage können jedoch nicht alle Betriebszustände abgedeckt werden, insbesondere können keine Betriebszustände abgedeckt werden, bei welchen bei laufender Kühlschmierstoffpumpe und aktiver Druckregelung aus dem Kühlschmierstoffverteilsystem wenig oder kein Kühlschmierstoff zur Kühlung und/oder Schmierung eines Bearbeitungsvorgangs entnommen wird. Beispielsweise sind dies Betriebszustände, in welchen eine Kühlschmierstoffabschaltung, insbesondere bei einem Werkzeugwechsel, erfolgt, oder es sind dies Betriebszustände, in welchen im Arbeitsraum lediglich eine geringe Kühlschmierstoffmenge benötigt wird.

Aus diesem Grund ist bei der erfindungsgemäßen Lösung vorgesehen, dass zwischen dem Kühlschmierstoffverteilsystem und dem Kühlschmierstoffreservoir eine Rücklaufleitung vorgesehen ist und dass in der Rücklaufleitung ein durch eine Rücklaufsteuerung steuerbares Rücklaufventil vorgesehen ist.

Wird die Rücklaufleitung durch das Rücklaufventil deaktiviert, das heißt das Rücklaufventil geschlossen, so ist die Kühlschmierstoffversorgungsanlage im rücklauffreien energieoptimalen Betriebsmodus betreibbar.

Wird jedoch das Rücklaufventil geöffnet und somit die Rücklaufleitung aktiviert, so ist der Betriebsmodus nicht mehr energieoptimal sondern energiesuboptimal, es besteht jedoch damit die Möglichkeit, die Druckregelung für den Druck im Kühlschmierstoffverteilsystem auch dann zu betreiben, wenn kein oder sehr wenig Kühlschmierstoff aus dem Kühlschmierstoffverteilsystem zur Bearbeitung des Werkstücks entnommen wird.

Somit eröffnet die aktivierbare und deaktivierbare Rücklaufleitung zwei Möglichkeiten des Betriebs der Kühlschmierstoffversorgungsanlage.

Rein prinzipiell könnte dabei das Rücklaufventil so ausgebildet sein, dass mit diesem die durch die Rücklaufleitung fließende Menge steuerbar ist.

Aus diesem Grund ist in der Rücklaufleitung eine Drossel vorgesehen, welche es ermöglicht, die maximal durch die Rücklaufleitung fließende Kühlschmierstoffmenge einzustellen.

Die Drossel ist dabei bei einer einfachen Lösung vorzugsweise einstellbar, es erfolgt jedoch eine Festeinstellung der Drossel für einen gesamten Bearbeitungszyklus oder eine dauerhafte Festeinstellung der Drossel entsprechend dem Regelbereich der Kühlschmierstoffpumpe.

Eine besonders günstige Lösung sieht vor, dass die Drossel derart eingestellt ist, dass die Rücklaufleitung bei einer Minimaldrehzahl der Kühlschmierstoffpumpe und Minimaldruck im Kühlschmierstoffverteilsystem die von der Kühlschmierstoffpumpe geförderte Kühlschmierstoffmenge in das Kühlschmierstoffreservoir zurückführt.

Das heißt, dass die Drossel so eingestellt ist, dass die durch diese fließende Kühlschmierstoffmenge der minimal erforderlichen Kühlschmierstoffmenge entspricht, die notwendig ist, um die Kühlschmierstoffpumpe weiter betreiben zu können, selbst wenn aus dem Kühlschmierstoffverteilsystem kein Kühlschmierstoff für eine Bearbeitung im Arbeitsraum entnommen wird.

Soll die Kühlschmierstoffversorgungsanlage noch weiter optimiert werden, so ist es möglich, dass die Drossel durch die Rücklaufsteuerung einstellbar ist, so dass die rücklaufende Kühlschmierstoffmenge zur Energieoptimierung dem jeweiligen Betriebszustand angepasst werden kann.

Damit lässt sich der zusätzliche Energieverbrauch, der dann anfällt, wenn die Rücklaufleitung geöffnet ist und die Kühlschmierstoffversorgung energiesuboptimal betrieben wird, auf dem geringstmöglichen Niveau halten, so dass selbst bei aktivierter Rücklaufleitung der zusätzliche Energieverbrauch so gering wie möglich ist.

Mit der Rücklaufsteuerung besteht somit die Möglichkeit, durch Deaktivieren der Rücklaufleitung die Kühlschmierstoffversorgungsanlage in einem energieoptimalen Betrieb durch Aktivieren der Rücklaufleitung die Kühlschmierstoffversorgungsanlage in einem energiesuboptimalen Betriebsmodus zu betreiben, allerdings mit dem Vorteil, dass damit der ohne aktivierte Rücklaufleitung zur Verfügung stehende Regelbereich erweitert wird.

Die Rücklaufsteuerung der Kühlschmierstoffversorgungsanlage ist vorzugsweise mit einer Maschinensteuerung der Werkzeugmaschine gekoppelt und erhält von dieser Kühlschmierstoffanforderungsinformationen.

Das heißt, dass die Maschinensteuerung der Rücklaufsteuerung übermittelt, welche Kühlschmierstoffanforderungen sich aus dem jeweiligen Bearbeitungsprozess ergeben, wobei die Kühlschmierstoffanforderungsinformationen primär Informationen über das Öffnen oder Schließen von Schaltventilen sind, welche Kühlschmierstoff einzelnen Werkzeugträgern oder Werkzeugen zuführen.

Vorzugsweise arbeitet die Rücklaufsteuerung so, dass sie die Rücklaufleitung durch Öffnen des Rücklaufventils dann aktiviert, wenn kein Kühlschmierstoff benötigt wird, das heißt kein Bearbeitungsprozess mit einem Werkstück und einem Werkzeug läuft, der zur Bearbeitung Kühlschmierstoff im Arbeitsraum benötigt.

Damit besteht die Möglichkeit dann, wenn erneut Kühlschmierstoff benötigt wird, die Kühlschmierstoffversorgungsanlage im energieoptimierten Betriebsmodus zu betreiben und dann, wenn kein Kühlschmierstoff für die Bearbeitung eines Werkstücks benötigt wird, die Kühlschmierstoffversorgungsanlage in einem energiesuboptimalen Betriebsmodus zu betreiben, allerdings mit der Möglichkeit, die Druckregelung für den Druck im Kühlschmierstoffverteilsystem aufrecht zu erhalten und somit bei erneuter Anforderung von Kühlschmierstoff für die Bearbeitung des Werkstücks Kühlschmierstoff sofort zur Verfügung zu haben.

Darüber hinaus sieht eine weitere vorteilhafte Lösung vor, dass die Rücklaufsteuerung mit der Druckregelung gekoppelt ist und von dieser Drehzahlinformationen zu der Kühlschmierstoffpumpe erhält.

Diese Drehzahlinformationen dienen der Rücklaufsteuerung dazu, zu erkennen, in welchem Drehzahlbereich die Kühlschmierstoffpumpe arbeitet, um somit Regelungszustände zu erkennen, in denen die Drehzahl der Kühlschmierstoffpumpe nahe der Minimaldrehzahl der Kühlschmierstoffpumpe, das heißt an der Untergrenze des Regelbereichs, liegt.

Aus diesem Grund ist vorzugsweise vorgesehen, dass die Rücklaufsteuerung die Rücklaufleitung durch Öffnen des Rücklaufventils aktiviert, wenn die Drehzahl der Kühlschmierstoffpumpe in einem kritischen Bereich nahe der Minimaldrehzahl liegt.

Das heißt, dass ein energiesuboptimaler Betriebsmodus der Kühlschmierstoffversorgungsanlage gewählt werden kann, um die Regelungsfunktion aufrecht erhalten zu können, jedoch mit dem Vorteil, dass die Druckregelung voll funktionsfähig ist und sich vergrößernde Kühlschmierstoffanforderungen dadurch rasch und druckgeregelt erfüllen lassen.

Darüber hinaus betrifft die Erfindung ein Verfahren zum Betreiben einer Werkzeugmaschine gemäß Anspruch 5. Der Vorteil dieser Lösung ist ebenfalls darin zu sehen, dass damit ohne die Notwendigkeit eines Rücklaufs von dem Kühlschmierstoffverteilsystem zu dem Kühlschmierstoffreservoir die Möglichkeit besteht, den Druck im Kühlschmierstoffverteilsystem auf einen vorgegebenen Wert zu regeln. Es ist dabei vorgesehen, dass durch die Drucksteuerung im Regelbereich die Drehzahl ausschließlich auf der Basis des von dem Drucksensor gemessenen Drucks gesteuert wird.

Ferner ist zweckmäßigerweise vorgesehen, dass der Regelbereich durch den Druck im Kühlschmierstoffverteilsystem und die Drehzahl der Kühlschmierstoffpumpe definiert wird.

Um den Regelbereich hinsichtlich sinnvoller Betriebswerte der Kühlschmierstoffpumpe zu begrenzen, ist vorzugsweise vorgesehen, dass eine Drehzahluntergrenze des Regelbereichs durch eine Mindestdrehzahl der Kühlschmierstoffpumpe definiert wird.

Ferner ist vorzugsweise vorgesehen, dass eine Drehzahlobergrenze des Regelbereichs durch eine Maximaldrehzahl für Dauerbetrieb der Kühlschmierstoffpumpe definiert wird.

Insbesondere ist vorteilhafterweise vorgesehen, dass die Druckregelung innerhalb des Regelbereichs im Druckregelmodus arbeitet und dass der Betriebsmodus der Druckregelung bei einem Überschreiten der Maximaldrehzahl oder einem Unterschreiten der Mindestdrehzahl von dem Druckregelmodus in einen Drehzahlbegrenzungsmodus übergeht und die Drehzahl der Kühlschmierstoffpumpe entweder auf die Maximaldrehzahl begrenzt, so dass diese die Maximaldrehzahl nicht überschreiten kann oder auf die Mindestdrehzahl begrenzt, so dass diese die Mindestdrehzahl nicht unterschreiten kann und dann, wenn die gemäß der Druckregelung geforderte Drehzahl wieder im Regelbereich liegt, wieder von dem Drehzahlbegrenzungsmodus auf den Druckregelmodus umschaltet.

Um bei dem erfindungsgemäßen Verfahren nicht strikt auf den Regelbereich unterhalb der Maximaldrehzahl für Dauerbetrieb begrenzt zu sein, ist vorzugsweise vorgesehen, dass sich der Regelbereich über die Maximaldrehzahl für Dauerbetrieb hinaus erstreckt, wenn die gemäß der Regelung erforderliche Drehzahl der Kühlschmierstoffpumpe die Maximaldrehzahl für Dauerbetrieb für einen festgelegten Überlastzeitraum überschreitet.

Damit besteht die Möglichkeit, die Kühlschmierstoffpumpe auch bei Drehzahlen über der Maximaldrehzahl für Dauerbetrieb betreiben zu können, sofern dies für eine Regelung des Drucks im Kühlschmierstoffverteilsystem erforderlich ist, ohne dass die Kühlschmierstoffpumpe während des Überlastzeitraums Schaden nimmt, da der Überlastzeitraum entsprechend gewählt ist.

Um auch für den Fall, dass die Drehzahl der Kühlschmierstoffpumpe für eine längere Zeitdauer über der Maximaldrehzahl für Dauerbetrieb liegen sollte, dieser Zeitraum jedoch den Überlastzeitraum überschreitet, einen definierten Betriebsmodus für die Kühlschmierstoffpumpe zur Verfügung zu haben, ist vorzugsweise vorgesehen, dass nach Ablauf des festgelegten Überlastzeitraums der Regelbereich auf die Maximaldrehzahl für Dauerbetrieb begrenzt wird, das heißt, dass seitens der Druckregelung die Drehzahl der Kühlschmierstoffpumpe so gewählt wird, dass sie - obwohl sie für eine Regelung über der maximalen Drehzahl für Dauerbetrieb liegen müsste - im Drehzahlbegrenzungsmodus auf die Maximaldrehzahl für Dauerbetrieb begrenzt wird.

In diesem Fall ist keine Druckregelung mehr entsprechend dem Druck im Kühlschmierstoffverteilsystem möglich, sondern es stellt sich im Drehzahlbegrenzungsmodus der Druck im Kühlschmierstoffverteilsystem ein, der der Maximaldrehzahl für Dauerbetrieb der Kühlschmierstoffpumpe entspricht, und zwar so lange, bis die für eine Druckregelung geforderte Drehzahl der Kühlschmierstoffpumpe wiederum unterhalb der Maximaldrehzahl für Dauerbetrieb der Kühlschmierstoffpumpe liegt, so dass dann wiederum die Regelung des Drucks im Kühlschmierstoffverteilsystem im Druckregelmodus fortgesetzt werden kann.

Bei der bislang beschriebenen Lösung ist nichts darüber ausgesagt, ob ein Rücklauf von Kühlschmierstoff von dem Kühlschmierstoffverteilsystem in das Kühlschmierstoffreservoir vorgesehen sein soll.

Die erfindungsgemäße Lösung schafft die Möglichkeit, innerhalb des vorgegebenen Regelbereichs ohne einen derartigen Rücklauf zu arbeiten.

Um jedoch auch Betriebszustände erfassen zu können, welche außerhalb des Regelbereichs liegen würden, wenn kein Rücklauf von Kühlschmierstoff aus dem Kühlschmierstoffverteilsystem in das Kühlschmierstoffreservoir erfolgt, ist vorgesehen, dass eine Rücklaufleitung von dem Kühlschmierstoffverteilsystem zu dem Kühlschmierstoffreservoir durch eine Rücklaufsteuerung aktiviert oder deaktiviert wird.

Eine derartige Rücklaufsteuerung schafft somit die Möglichkeit, die Kühlschmierstoffversorgungsanlage entweder in einem energieoptimalen Betriebsmodus zu betreiben, oder in einem energiesuboptimalen Betriebsmodus, wobei dadurch Betriebszustände möglich sind, die ohne Rücklauf außerhalb des Regelbereichs liegen würden.

Aus diesem Grund ist zweckmäßigerweise vorgesehen, dass in der Rücklaufleitung mit einer Drossel, die diese durchlaufende Kühlschmierstoffmenge festgelegt wird.

Insbesondere wird die Drossel derart eingestellt, dass die Rücklaufleitung bei einer Minimaldrehzahl der Kühlschmierstoffpumpe und Minimaldruck im Kühlschmierstoffverteilsystem die von der Kühlschmierstoffpumpe geforderte Kühlschmierstoffmenge in das Kühlschmierstoffreservoir zurückführt.

Um die Rücklaufleitung sinnvoll aktivieren zu können, ist vorzugsweise vorgesehen, dass der Rücklaufsteuerung von einer Maschinensteuerung der Werkzeugmaschine Kühlschmierstoffanforderungsinformationen übermittelt werden, so dass die Rücklaufsteuerung entsprechend der Kühlschmierstoffanforderungen reagieren kann.

Beispielsweise kann die Rücklaufsteuerung dann, wenn eine Kühlschmierstoffanforderung seitens der Werkzeugmaschine beendet wird, die Rücklaufleitung durch Öffnen des Rücklaufventils aktivieren.

Insbesondere erfolgt, um Druckspitzen im Kühlschmierstoffverteilsystem abzubauen, eine Aktivierung der Rücklaufleitung spätestens bei einem Beenden einer Kühlschmierstoffanforderung, d.h. einem Abschalten einer Kühlschmierstoffzufuhr zum Arbeitsraum.

Darüber hinaus ist zweckmäßigerweise vorgesehen, dass der Rücklaufsteuerung von der Druckregelung Drehzahlinformationen zu der Kühlschmierstoffpumpe übermittelt werden.

Auch mit derartigen Drehzahlinformationen besteht die Möglichkeit, die Rücklaufleitung zu aktivieren oder zu deaktivieren.

Vorzugsweise ist dabei vorgesehen, dass die Rücklaufsteuerung die Rücklaufleitung durch Öffnen des Rücklaufventils aktiviert, wenn die Drehzahl der Kühlschmierstoffpumpe in einem kritischen Drehzahlbereich nahe der Minimaldrehzahl arbeitet, so dass dadurch sichergestellt werden kann, dass die Druckregelung auch bei Entnahme geringer Kühlschmierstoffmengen arbeitet.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Frontansicht einer erfindungsgemäßen Werkzeugmaschine;
- Fig. 2: eine schematische Darstellung einer Kühlschmierstoffversorgungsanlage;
- Fig. 3: eine schematische Darstellung eines Regelungsbereichs einer Druckregelung einer erfindungsgemäßen Kühlschmierstoffanlage;
- Fig. 4: eine schematische Darstellung eines Wechsels von einem Werkzeug zu einem anderen Werkzeug mit Darstellung einer Stellung von Schaltventilen für Kühlschmierstoffanforderungen, mit einer Darstellung einer Ansteuerung des Rücklaufventils, mit Darstellung einer Drehzahl der Kühlschmierstoffpumpe und mit Darstellung eines Verlaufs eines Drucks im Kühlschmierstoffverteilsystems;
- Fig. 5: eine Darstellung entsprechend Fig. 4 bei einem Wechsel von einem Werkzeug zu einem anderen Werkzeug mit Abschaltung der Kühlschmierstoffanforderung;
- Fig. 6: eine Darstellung entsprechend Fig. 5 mit einem Werkzeugwechsel von einem Werkzeug zu einem anderen Werkzeug mit geringer Durchflussmenge von Kühlschmierstoff;

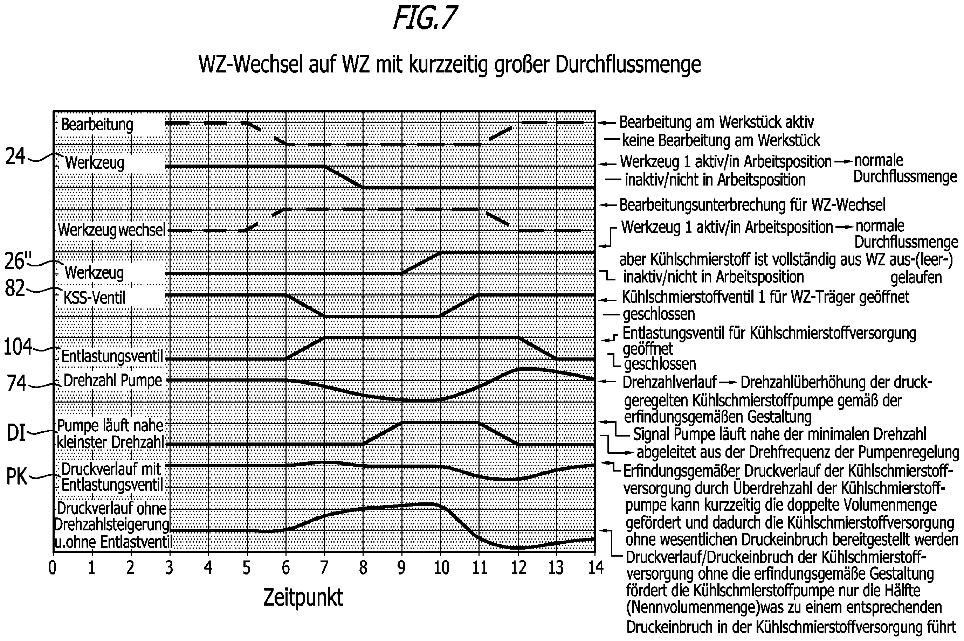

- Fig. 7: eine Darstellung ähnlich Fig. 5 bei einem Wechsel von einem Werkzeug zu einem Werkzeug mit großer Durchflussmenge für Kühlschmierstoff;
- Fig. 8: eine Darstellung ähnlich Fig. 5 bei einem Wechsel von einem Werkzeug zu einem anderen Werkzeug mit maximaler Durchflussmenge für Kühlschmierstoff und
- Fig. 9: eine Darstellung ähnlich Fig. 4 beim Abschalten einer erfindungsgemäßen Kühlschmierstoffversorgungsanlage.

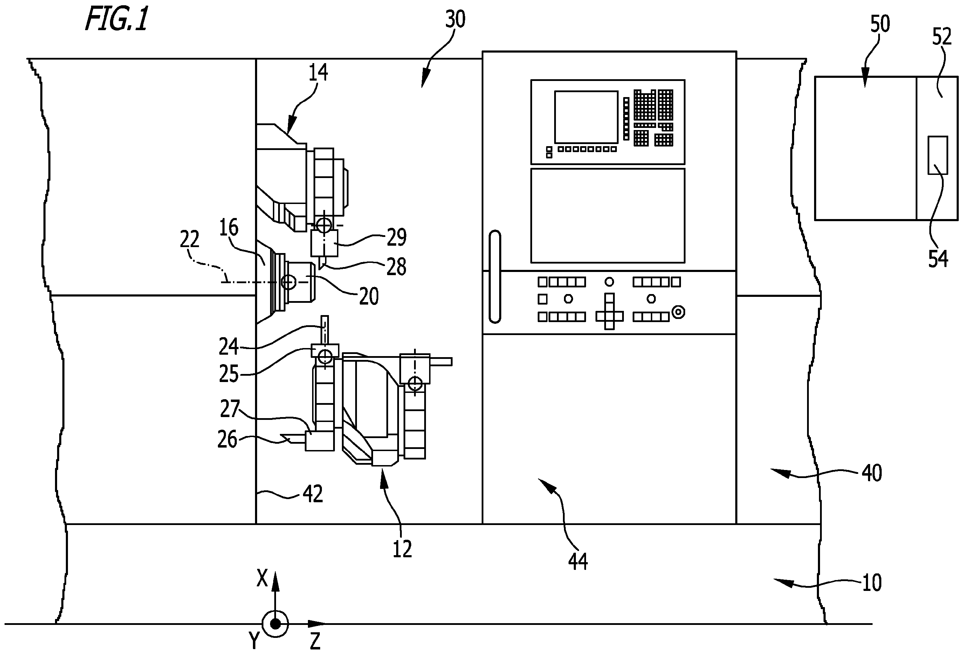

Ein Ausführungsbeispiel einer erfindungsgemäßen Werkzeugmaschine, dargestellt in Fig. 1, umfasst ein Maschinengestell 10, an welchem beispielsweise ein erster Werkzeugträger 12 und ein zweiter Werkzeugträger 14 angeordnet sind.

Ferner ist an dem Maschinengestell 10 ein Werkstückträger 16 vorgesehen, welcher beispielsweise als Arbeitsspindel ausgebildet ist, und welcher ein als Ganzes mit 20 bezeichnetes Werkstück aufnimmt und dieses beispielsweise um eine Spindelachse 22 rotierend antreiben kann.

Der erste Werkzeugträger 12 und der zweite Werkzeugträger 14 sowie der Werkstückträger 16 sind relativ zueinander bewegbar an dem Maschinengestell 10 angeordnet, um beispielsweise einzelne Werkzeuge 24, 26, 28 derselben, die in entsprechenden Werkzeughaltern 25, 27, 29 angeordnet sind, welche ihrerseits in dem jeweiligen Werkzeugträger 16 bzw. 14 sitzen, an dem Werkstück 20 zur Bearbeitung des Werkstücks 20 einsetzen zu können.

Der Werkstückträger 16 mit dem Werkstück 20 sowie die Werkzeugträger 12 und 14 mit den dazugehörigen Werkzeugen 24, 26, 28 sind in einem Arbeitsraum 30 der Werkzeugmaschine angeordnet.

Sämtliche Aggregate der Werkzeugmaschine sowie auch der Arbeitsraum 30 sind von einer als Ganzes mit 40 bezeichneten Maschinenverhaubung umschlossen, die im Bereich des Arbeitsraums 30 eine Zugangsöffnung 42 aufweist, über welche der Arbeitsraum zugänglich ist.

Die Zugangsöffnung 42 ist durch eine als Ganzes mit 44 bezeichnete Schiebehaube verschließbar, welche relativ zur Maschinenverhaubung 40 von einer die Zugangsöffnung 42 freigebenden Stellung, dargestellt in Fig. 1, in eine in Fig. 1 nicht dargestellte, die Zugangsöffnung 42 verschließende Stellung relativ zur Maschinenverhaubung 40 verschiebbar ist.

Sämtliche Operationen im Arbeitsraum 30 und insbesondere auch die Bewegungen der Werkzeugträger 12 und 14 sowie des Werkstückträgers 16 werden durch eine Maschinensteuerung 50 gesteuert, die ein den Arbeitsvorgang festlegendes und in einem Speicher 52 derselben abgespeichertes Bearbeitungsprogramm 54 abarbeitet.

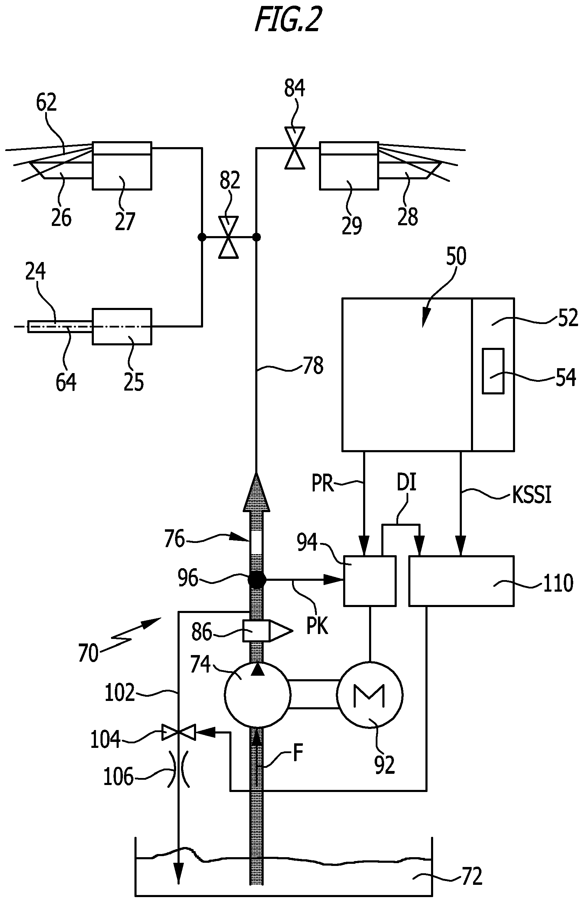

Zur Bearbeitung des Werkstücks 20 ist es erforderlich, dem jeweiligen Werkzeug, beispielsweise den in Fig. 2 dargestellten Werkzeugen 24, 26, 28 Kühlschmierstoff zuzuführen, wobei der Kühlschmierstoff beispielsweise in Form eines vom entsprechenden Werkzeughalter 27, 29 oder auch gegebenenfalls direkt vom entsprechenden Werkzeugträger 14, 16 ausgehenden Kühlschmierstoffstrahls einem Schneidenbereich der Werkzeuge 26, 28 zugeführt wird oder intern über im jeweiligen Werkzeughalter oder Werkzeug, beispielsweise in dem Werkzeughalter 25 und dem Werkzeug 24 vorgesehene Kanäle, als Kühlschmierstoffstrom einem Schneidenbereich des Werkzeugs 24 zugeführt werden kann, wie beispielsweise in Fig. 2 dargestellt.

Hierzu ist eine in Fig. 2 als Ganzes mit 70 bezeichnete Kühlschmierstoffversorgungsanlage vorgesehen, welche ein Kühlschmierstoffreservoir 72 umfasst, aus welchem mit einer Kühlschmierstoffpumpe 74 Kühlschmierstoff entnommen wird und einem als Ganzes mit 76 bezeichneten Kühlschmierstoffverteilsystem 76 zugeführt wird, welches Kühlschmierstoffleitungen 78 aufweist, die zu den einzelnen Werkzeugträgern 14 und 12 und den einzelnen Werkzeug 24, 26, 28 führen.

Ferner ist in den zu jedem der Werkzeuge 26, 24 führenden Kühlschmierstoffleitungen 78 ein Schaltventil 82 bzw. 84 vorgesehen, welches die Möglichkeit eröffnet, bei einem Werkzeugwechsel die Kühlschmierstoffzufuhr zu dem jeweiligen Werkzeug 24, 26 oder 28 zu unterbrechen. Dabei kann beispielsweise das Schaltventil 82, 84, wie im Fall der Werkzeuge 24 und 26, dem jeweiligen Werkzeugträger 12 zugeordnet sein, so dass über dieses die Kühlschmierstoffzufuhr zu allen Werkzeugen 24, 26 desselben schaltbar ist, es kann das Schaltventil, beispielsweise das Schaltventil 84, einem Werkzeug, beispielsweise dem Werkzeug 28 zugeordnet sein.

Bei der erfindungsgemäßen Lösung ist dabei die Kühlschmierstoffpumpe 74 durch einen Antriebsmotor 92 angetrieben, welcher beispielsweise mittels eines Frequenzumrichters drehzahlsteuerbar ist, wobei eine Steuerung der Drehzahl des Antriebsmotors 92 durch eine Druckregelung 94 erfolgt, die mittels eines Drucksensors 96 einen Druck PK im Kühlschmierstoffverteilsystem 76 erfasst.

Die Druckregelung 94 vergleicht dabei den Druck PK im Kühlschmierstoffverteilsystem 76 mit einem Regeldruck PR, der dieser von der Maschinensteuerung 50 vorgegeben wird. Durch die Druckregelung 94 wird durch Regelung der Drehzahl der Kühlschmierstoffpumpe 74 der Wert des Drucks PK derart geändert, dass dieser den Wert des Referenzdrucks PR erreicht, und mittels der Druckregelung 94 auf diesem Wert gehalten.

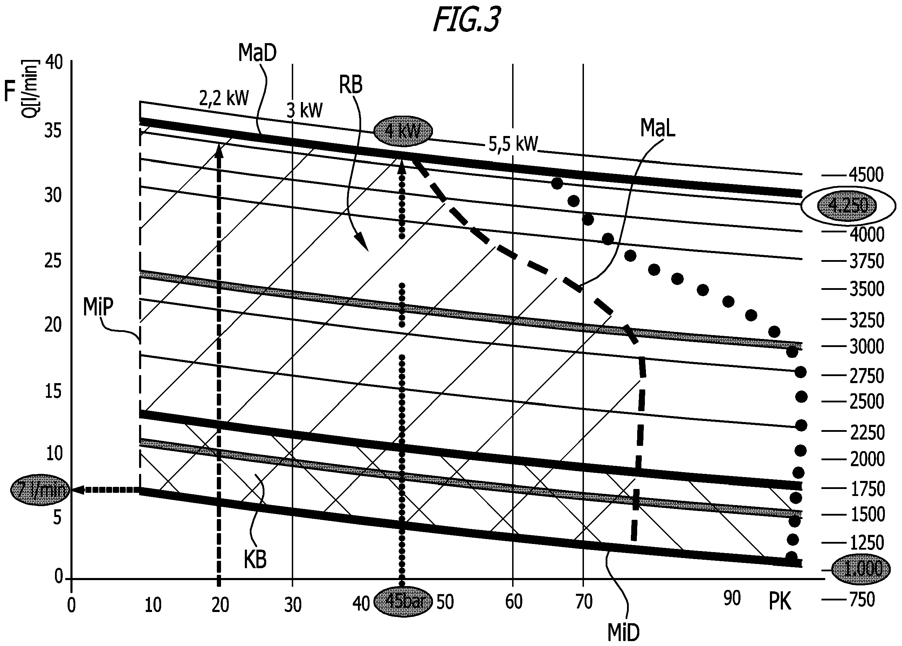

Die Druckregelung 94 arbeitet dabei in einem Druckregelmodus ohne weitere Eingriffe und störungsfrei innerhalb eines in Fig. 3 schraffiert dargestellten Regelbereichs RB, welcher einerseits durch den Druck PK im Kühlschmierstoffverteilsystem 76 und andererseits durch die von der Kühlschmierstoffpumpe 74 geförderte Fördermenge F definiert ist, wobei der Regelbereich RB einerseits durch eine Minimaldrehzahl MiD der Kühlschmierstoffpumpe 74 und andererseits durch einen Minimaldruck MiP ab, welchem das Kühlschmierstoffverteilsystem 76 zuverlässig arbeitet, festgelegt ist. Außerdem ist der Regelbereich RB durch eine Maximaldrehzahl für Dauerbetrieb MaD der Kühlschmierstoffpumpe 74 sowie eine maximal zulässige Leistungsaufnahme MaL der Kühlschmierstoffpumpe 74 begrenzt.

Im Druckregelmodus kann die Druckregelung 94 derart arbeiten, dass die Drehzahl der Kühlschmierstoffpumpe während eines festgelegten Überlastzeitraums die Maximaldrehzahl für Dauerbetrieb MaD überschreiten kann, wird der Überlastzeitraum überschritten, so geht die Druckregelung 94 in einen Drehzahlbegrenzungsmodus über und begrenzt die Drehzahl der Kühlschmierstoffpumpe 74 so lange auf die Maximaldrehzahl für Dauerbetrieb MaD bis sich bei dem Druckregelmodus wieder Drehzahlen ergeben, die unter der Maximaldrehzahl für Dauerbetrieb MaD liegen. Ist dies der Fall, so erfolgt ein Umschalten auf den Druckregelmodus.

Zur Absicherung des Kühlschmierstoffverteilsystems 76 gegen einen Überdruck, der Schäden desselben bewirken könnte, ist das Kühlschmierstoffverteilsystem 76 noch mit einem Berstventil 86 versehen, das bei Überschreiten eines maximal zulässigen Drucks PK im Kühlschmierstoffverteilsystem 76 öffnet und somit eine weitere Druckerhöhung verhindert.

Um mit der erfindungsgemäßen Kühlschmierstoffversorgungsanlage 70 auch dann zuverlässig und druckgeregelt arbeiten zu können, wenn die von dem Kühlschmierstoffverteilsystem 76 durch die Werkzeuge 24, 26, 28 abgenommene Kühlschmierstoffmenge eine derart kleine Fördermenge F erfordert, dass diese außerhalb des Regelbereichs RB liegt, ist ausgehend von dem Kühlschmierstoffverteilsystem 76 eine zum Kühlschmierstoffreservoir 72 führende Rücklaufleitung 102 vorgesehen, in welcher ein Rücklaufventil 104 sowie eine einstellbare Drossel 106 vorgesehen sind.

Durch das Rücklaufventil 104 ist die Rücklaufleitung 102 aktivierbar, so dass Kühlschmierstoff von dem Kühlschmierstoffverteilsystem 76 zum Kühlschmierstoffreservoir 72 zurückfließen kann wenn das Rücklaufventil 104 geöffnet ist, während die Rücklaufleitung 102 dann deaktiviert ist, wenn das Rücklaufventil 104 geschlossen ist.

Mit einer einstellbaren Drossel 106 ist ferner die maximal zulässige Rücklaufmenge des durch die Rücklaufleitung 102 fließenden Kühlschmierstoffs einstellbar.

Vorzugsweise ist die Drossel 106 bei dem ersten Ausführungsbeispiel der erfindungsgemäßen Kühlschmierstoffversorgungsanlage 70, beispielsweise manuell oder auch durch eine Steuerung, auf vorgegebene Werte fest einstellbar, so dass sich während des Betriebs der Werkzeugmaschine in einem Bearbeitungszyklus die Einstellung der Drossel 106 nicht ändert.

Die Ansteuerung des Rücklaufventils 104 in der Rücklaufleitung 102 erfolgt durch eine Rücklaufsteuerung 110 der Kühlschmierstoffversorgungsanlage 70, welche mit dem Rücklaufventil 104 gekoppelt ist.

Die Rücklaufsteuerung 110 erhält dabei von der Maschinensteuerung 50 Kühlschmierstoffanforderungsinformationen KSSI und außerdem von der Druckregelung 94 Drehzahlinformationen DI, die angeben, mit welcher Drehzahl die Kühlschmierstoffpumpe 74 betrieben wird.

Die Werkzeugeinsatzinformation WI gibt dabei an, ob und welchen der Werkzeuge 26, 24 seitens der Maschinensteuerung 50 durch die Schaltventile 82 und 84 in den Kühlschmierstoffleitungen 78 Kühlschmierstoff zugeschaltet ist.

Die Arbeitsweise der erfindungsgemäßen Werkzeugmaschine mit der Kühlschmierstoffversorgungsanlage 70 wird nachfolgend anhand einiger Betriebszustandsänderungen im Einzelnen beschrieben und erläutert.

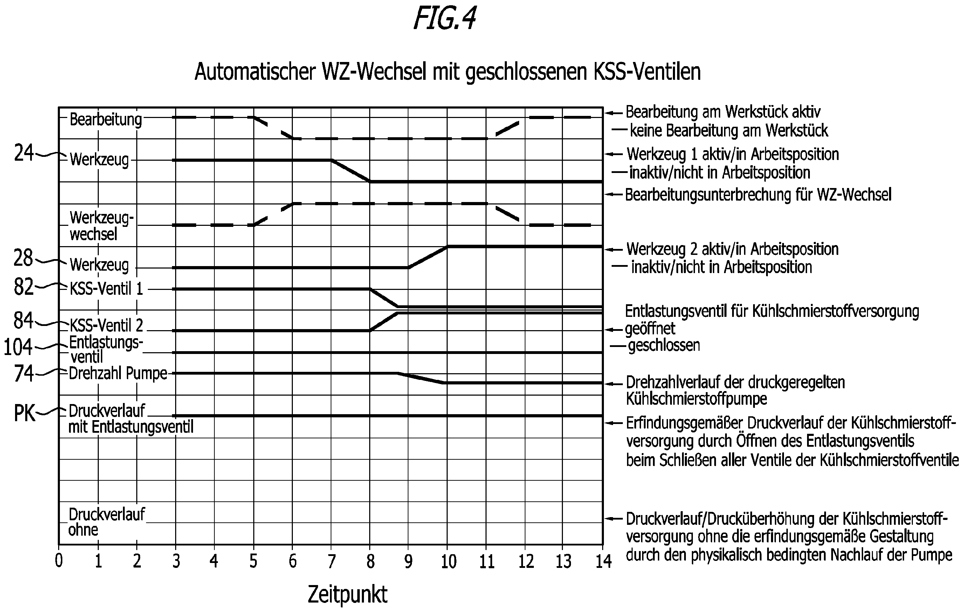

Erfolgt wie beispielsweise in Fig. 4 dargestellt, ein Wechsel vom Werkzeug 24 im Werkzeugträger 12 auf das Werkzeug 28 im Werkzeugträger 14, so sieht die Maschinensteuerung 50 einen Werkzeugwechsel vor, bei welchem das Werkzeug 24 in die inaktive Position verbracht wird und kurz darauf das Werkzeug 28 in die aktive Position gebracht wird.

In diesem Fall lässt sich beispielsweise durch Schließen des Schaltventils 82 die Kühlschmierstoffversorgung der Werkzeuge 24 und 26 des ersten Werkzeugträgers 12 abschalten und gleichzeitig durch Öffnen des Schaltventils 84 die Kühlschmierstoffversorgung für den Werkzeugträger 14 mit dem Werkzeug 28 einschalten.

In diesem Fall wird durch das gleichzeitige Abschalten des Schaltventils 82 kombiniert mit dem gleichzeitigen Einschalten des Schaltventils 84 stets eine Fördermenge von Kühlschmierstoff aus dem Kühlschmierstoffverteilsystem 76 entnommen, so dass keine Unterbrechung der Abnahme von Kühlschmierstoff aus dem Kühlschmierstoffverteilsystem 76 erfolgt und somit keine Notwendigkeit besteht, das Schaltventil 104 in der Rücklaufleitung 102 zu öffnen.

In diesem Fall passt sich die Drehzahl der Kühlschmierstoffpumpe 74 aufgrund der Druckregelung 94 der Kühlschmierstoffmenge an, die für das erste Werkzeug 24 benötigt wird und der Kühlschmierstoffmenge, die für das dritte Werkzeug 28 benötigt wird, wobei beispielsweise bei geringerer für das Werkzeug 28 benötigter Kühlschmierstoffmenge dann die Drehzahl der Kühlschmierstoffpumpe 74 bei dem Wechsel von dem Werkzeug 24 zum Werkzeug 28 sich auf eine niedrigere Drehzahl einstellt.

Das heißt, dass bei dem in Fig. 4 dargestellten Fall des Wechsels des Bearbeitungszustandes mit dem Werkzeug 24 zum Bearbeitungszustand mit dem Werkzeug 28 ein Aktivieren der Rücklaufleitung 102 nicht notwendig ist, da die Druckregelung 94 selbstständig in der Lage ist, aufgrund des durch die Maschinensteuerung 50 vorgegebenen Referenzdrucks PR und der sich ändernden Kühlschmierstoffmenge, beim Wechsel vom Werkzeug 24 auf das Werkzeug 28 die Drehzahl der Kühlschmierstoffpumpe 74 entsprechend anzupassen.

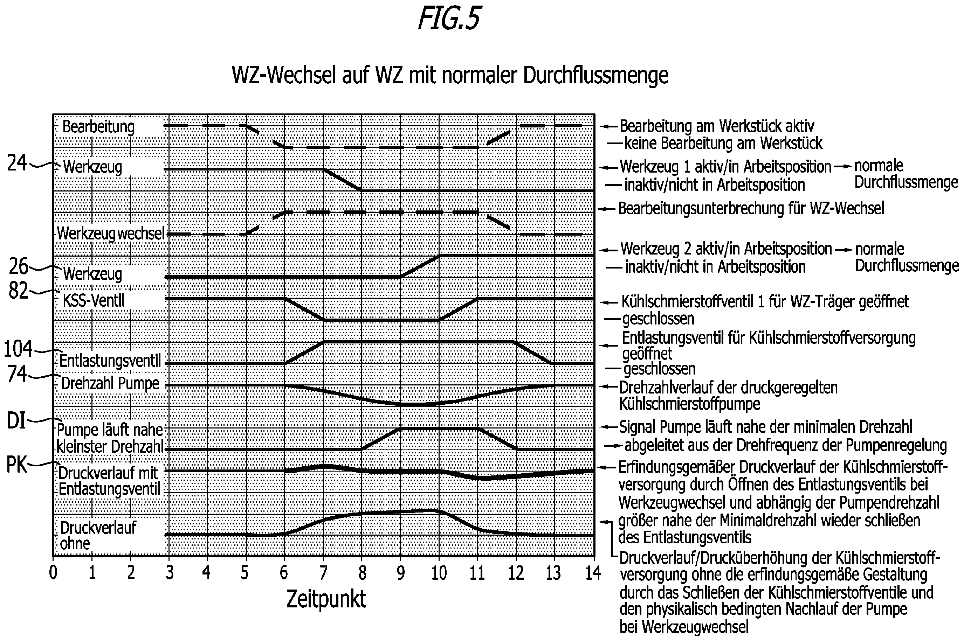

Erfolgt dagegen, wie in Fig. 5 dargestellt, ein Wechsel von einem Bearbeitungszustand mit dem Werkzeug 24 zu einem Bearbeitungszustand mit dem Werkzeug 26 am selben Werkzeugträger 12, so erfolgt bei dem von der Maschinensteuerung 50 durchgeführten Werkzeugwechsel vom Werkzeug 24 auf das Werkzeug 26 zeitweilig ein Abschalten der Kühlschmierstoffversorgung für beide Werkzeuge 24 und 26 mittels des Schaltventils 82, so dass die aus den Kühlschmierstoffverteilsystem 76 entnommene Kühlschmierstoffmenge während des Abschaltens durch das Schaltventil 82 auf null zurückgeht.

Da diese Kühlschmierstoffanforderungsinformation KSSI der Rücklaufsteuerung 110 von der Maschinensteuerung 50 übermittelt wird, und außerdem der Rücklaufsteuerung 110 übermittelt wird, dass kein anderes Werkzeug mit Kühlschmierstoff versorgt wird, aktiviert die Rücklaufsteuerung 110 das Rücklaufventil 104 und öffnet somit die Rücklaufleitung 102, so dass die Kühlschmierstoffpumpe 74 während des Zeitraums, während welchem das Schaltventil 82 geschlossen ist, auf die Minimaldrehzahl MiD herunterregeln kann, ohne dass eine nennenswerte unerwünschte Erhöhung des Drucks PK im Kühlschmierstoffverteilsystem 76 auftritt, sondern lediglich geringfügige Effekte dadurch eintreten, dass aufgrund der mechanischen Trägheitsmomente der Kühlschmierstoffpumpe 74 ein gewisser physikalischer Nachlauf erfolgt.

Betrachtet man dabei das Diagramm gemäß Fig. 3 mit dem Regelbereich RB, so hat das Schließen des Schaltventils 82 zur Kühlschmierstoffversorgung der Werkzeuge 24 und 26 zur Folge, dass die Minimaldrehzahl MiD der Kühlschmierstoffpumpe 74 unterschritten werden müsste, da zeitweilig keine Kühlschmierstoffmenge aus dem Kühlschmierstoffverteilsystem 76 entnommen wird.

Dieses unterschreiten der Minimaldrehzahl MiD, die den Regelbereich RB nach unten begrenzt, wird jedoch erfindungsgemäß dadurch vermieden, dass durch das Schaltventil 104 die Rücklaufleitung 102 aktiviert wird, die somit die Druckregelung 94 wiederum innerhalb des Regelbereichs RB gemäß Fig. 3 arbeiten lässt, da die über die Rücklaufleitung 102 abfließende Kühlschmierstoffmenge durch die Einstellung der Drossel 106 derart dimensioniert ist, dass die Kühlschmierstoffpumpe 74 bei ihrer Minimaldrehzahl MiD betrieben werden kann.

Dadurch, dass das Schaltventil 82 geschlossen ist und die Drossel 106 in der Rücklaufleitung 102 so eingestellt ist, dass die Kühlschmierstoffpumpe 74 bei aktivierter Rücklaufleitung 102 nur bei der Minimaldrehzahl MiD laufen kann, wird von der Druckregelung 94 die Drehzahl der Kühlschmierstoffpumpe 74 auch auf eine Drehzahl in einem kritischen Bereich KB in Fig. 3, der sich an die Minimaldrehzahl MiD anschließt, reduziert und dies der Rücklaufregelung 110 mit dem Signal DI gemeldet, so dass diese erkennen kann, dass ein Schließen des Rücklaufventils 104 nicht erfolgen darf, da ansonsten die Minimaldrehzahl MiD unterschritten würde.

Erst wenn nach Öffnen des Schaltventils 82 die Drehzahl der Kühlschmierstoffpumpe über einen in Fig. 3 markierten kritischen Bereich KB angetrieben ist, erkennt dies die Rücklaufsteuerung 110 am Signal DI und kann dann das Rücklaufventil 104 schließen.

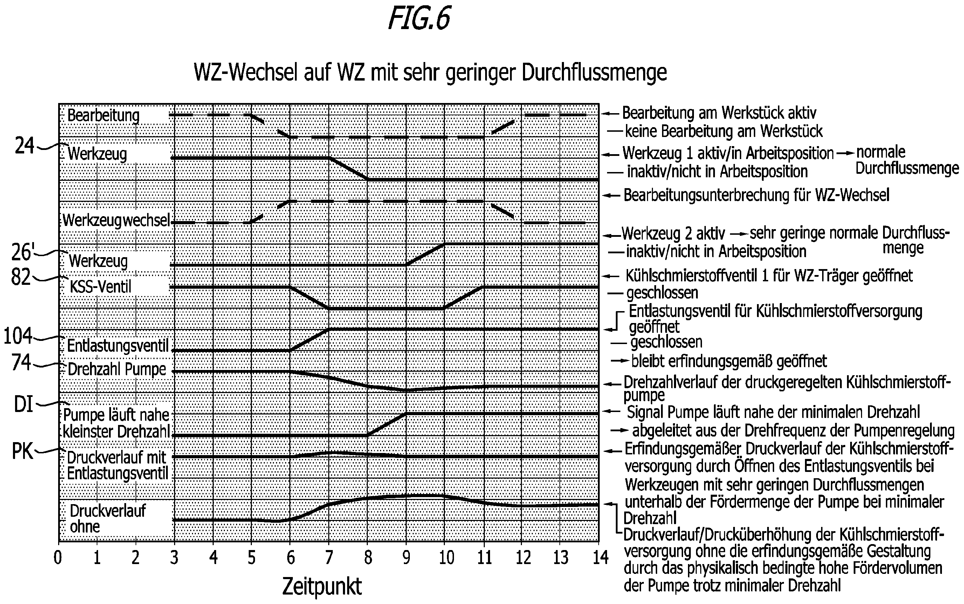

In Fig. 6 ist der Wechsel von dem Werkzeug 24 mit üblichem Kühlschmierstoffverbrauch auf ein Werkzeug 26', mit geringem Kühlschmierstoffverbrauch dargestellt, wobei der Kühlschmierstoffverbrauch nach dem Wechsel auf das Werkzeug 26' derart gering ist, dass die Kühlschmierstoffmenge unter der Fördermenge F liegt, die bei der Minimaldrehzahl MiD der Kühlschmierstoffpumpe 76 gefördert wird, so wird beim Schließen des Schaltventils 82 das Entlastungsventil 104, wie im Fall des Werkzeugwechsels gemäß Fig. 5 beschrieben, geöffnet, um die Rücklaufleitung 102 in der beschriebenen Art und Weise zu aktivieren.

Die Rückflusssteuerung 110 stellt jedoch fest, dass nach Verbringen des Werkzeugs 26' in die Arbeitsposition und Öffnen des Schaltventils 82 zur Kühlschmierstoffversorgung des Werkzeugs 26' die Kühlschmierstoffpumpe 74 nach wie vor im kritischen Bereich KB läuft, was der Rückflusssteuerung 110 über die Drehzahlinformation DI von der Druckregelung 94 übermittelt wird, so dass die Rückflusssteuerung 110 selbst nach Einschalten des Schaltventils 82 die Rückflusssteuerung 110 ein Deaktivieren der Rücklaufleitung 102 durch Schließen des Rücklaufventils 104 unterlässt, sondern dieses während des Einsatzes des Werkzeuges 26 geöffnet bleibt.

Dadurch kann die Druckregelung 94 in ihrem Regelbereich RB im Druckregelmodus betrieben werden, da die für die Minimaldrehzahl MiD erforderliche Kühlschmierstoffmenge in diesem Fall nicht über das Werkzeug 26' abfließen kann, jedoch über die Rücklaufleitung 102 abfließen kann, so dass durch die zusätzliche über die Rücklaufleitung 102 abfließende Kühlschmierstoffmenge die Druckregelung 94 wieder im Regelbereich RB betreibbar ist.

Wird dagegen von dem Werkzeug 24 auf ein Werkzeug 26" eine sehr große Menge an Kühlschmierstoff benötigt, so treten dieselben Effekte auf, wie im Zusammenhang mit Fig. 5 erläutert, allerdings tritt nach Wiedereinschalten des Schaltventils 82 aufgrund der noch aktiven Rücklaufleitung 102 ein sehr großer Kühlschmierstoffbedarf auf, so dass die Druckregelung zur Aufrechterhaltung des Drucks PR die Drehzahl der Kühlschmierstoffpumpe 74 sehr stark erhöht, was dazu führen kann, dass die Maximaldrehzahl für Dauerbetrieb MaD überschritten wird, so lange, bis die Rücklaufsteuerung 110 das Rücklaufventil 104 geschlossen und die Rücklaufleitung 102 deaktiviert hat.

Eine derartige Drehzahlüberhöhung wird von der Druckregelung 94 durchgeführt und toleriert, da die Druckregelung 94 so aufgebaut ist, dass diese eine Drehzahlüberhöhung der Kühlschmierstoffpumpe 74 für einen definiert festgelegten Überlastzeitraum zulässt.

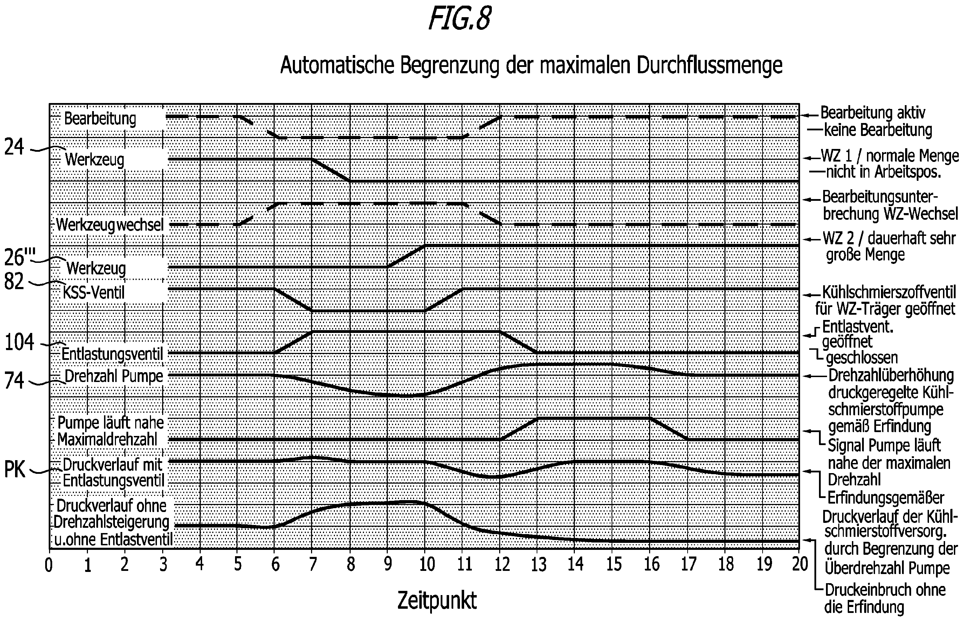

Erfolgt dagegen, wie in Fig. 8 dargestellt, ein Wechsel von dem Werkzeug 24 auf ein Werkzeug 26"', dessen Kühlschmierstoffbedarf extrem hoch ist, so kann der Fall eintreten, dass selbst nach Schließen des Rücklaufventils 104 die Druckregelung 94 die Drehzahl der Kühlschmierstoffpumpe 74 so erhöht, dass diese dauerhaft über der durch den Regelbereich RB vorgegebenen Maximaldrehzahl für Dauerbetrieb MaD der Kühlschmierstoffpumpe 74 liegt. In diesem Fall schaltet die Druckregelung 94 nach dem definiert festgelegten Überlastzeitraum, während welchem eine Drehzahlüberhöhung der Schmierstoffpumpe 74 zugelassen wird, von dem Druckregelmodus auf einen Drehzahlbegrenzungsmodus um und begrenzt die Drehzahl der Kühlschmierstoffpumpe 74 auf die Maximaldrehzahl für Dauerbetrieb MaD, ohne dass eine Regelung des Drucks PK im Kühlschmierstoffverteilsystem 76 erfolgt, um die Kühlschmierstoffpumpe 74 vor einer Beschädigung zu schützen.

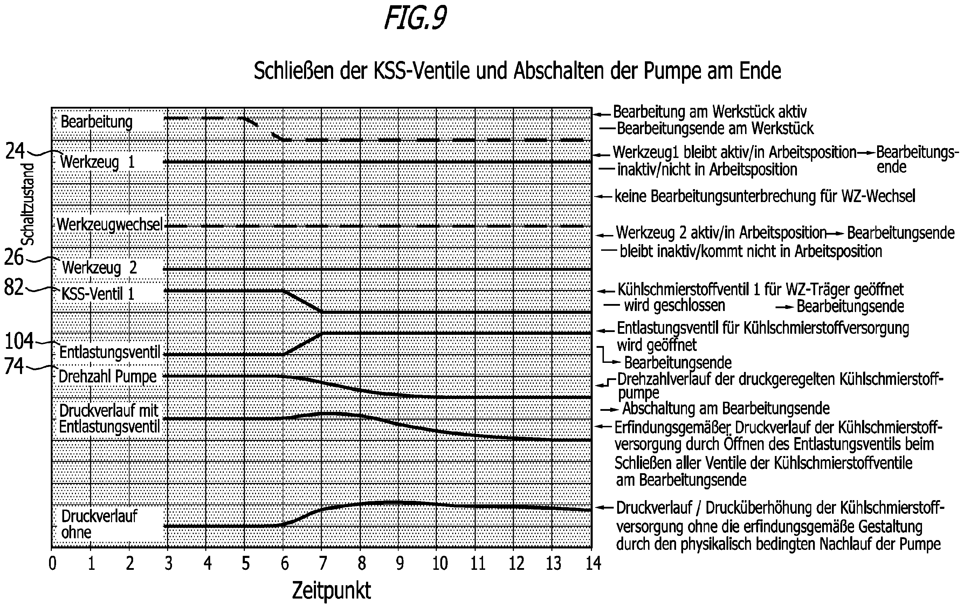

Wird dagegen, wie in Fig. 9 dargestellt, beim Beenden der Bearbeitung das Schaltventil 82 geschlossen, um die Kühlschmierstoffzufuhr zum Werkzeug 24 zu beenden, während kein anderes Werkzeug in Arbeitsposition gebracht werden soll, so wird seitens der Rücklaufsteuerung 110 gleichzeitig mit dem Schließen des Schaltventils 82 das Rücklaufventil 104 geöffnet, um somit die Rücklaufleitung 102 zu aktivieren, so dass dadurch selbst ein physikalischer Nachlauf der gleichzeitig mit dem Schließen des Schaltventils 82 abgeschalteten Kühlschmierstoffpumpe 74 keine Druckerhöhung im Kühlschmierstoffverteilsystem 76 zur Folge hat.

## Patentansprüche

1. Werkzeugmaschine umfassend einen Arbeitsraum (30), in welchem ein Werkstückträger (16) zur Aufnahme eines Werkstücks (20) sowie mindestens ein Werkzeugträger (12, 14) mit mindestens einem Werkzeug (24, 26, 28) angeordnet und relativ zueinander bewegbar sind, sowie umfassend eine Kühlschmierstoffversorgungsanlage (70) für den Arbeitsraum (30) mit einem Kühlschmierstoffreservoir (72), mit einem Kühlschmierstoffverteilsystem (76) und mit einer drehzahlsteuerbaren Kühlschmierstoffpumpe (74), welche saugseitig mit dem Kühlschmierstoffreservoir (72) und druckseitig mit dem Kühlschmierstoffverteilsystem (76) verbunden ist,
wobei dem Kühlschmierstoffverteilsystem (76) ein Drucksensor (96) zugeordnet ist, der mit einer Druckregelung (94) zur Regelung des Drucks (PK) im Kühlschmierstoffverteilsystem (76) zusammenwirkt, welche unter Berücksichtigung des von dem Drucksensor (96) gemessenen Drucks (PK) eine Drehzahl der Kühlschmierstoffpumpe (74) derart steuert, dass innerhalb eines definierten Regelbereichs (RB) in dem Kühlschmierstoffverteilsystem (76) ein der Drucksteuerung (94) vorgebbarer Referenzdruck (PR) aufrecht erhalten wird,
wobei die Druckregelung (94) im Regelbereich (RB) die Drehzahl ausschließlich auf der Basis des von dem Drucksensor (96) gemessenen Drucks (PK) steuert, wobei zwischen dem Kühlschmierstoffverteilsystem (76) und dem Kühlschmierstoffreservoir (72) eine Rücklaufleitung (102) vorgesehen ist, wobei in der Rücklaufleitung (102) ein durch eine Rücklaufsteuerung (110) steuerbares Rücklaufventil (104) vorgesehen ist und wobei mit dem Rücklaufventil (104) die Rücklaufleitung (102) nur aktivierbar, um die Kühlschmierstoffversorgungsanlage (70) in einem energiesuboptimalen Betriebsmodus zu betreiben, oder deaktivierbar, um die Kühlschmierstoffversorgungsanlage (70) in einem rücklauffreien energieoptimalen Betriebsmodus zu betreiben, ist und wobei in der Rücklaufleitung eine Drossel (106) vorgesehen ist.

2. Werkzeugmaschine nach Anspruch 1, **dadurch gekennzeichnet dass** der Regelbereich (RB) durch den Druck im Kühlschmierstoffverteilsystem (76) und die Drehzahl der Kühlschmierstoffpumpe (74) definiert ist, dass insbesondere eine Drehzahluntergrenze des Regelbereichs (RB) durch eine Mindestdrehzahl der Kühlschmierstoffpumpe (74) definiert ist und dass insbesondere eine Drehzahlobergrenze des Regelbereichs (RB) durch eine Maximaldrehzahl für Dauerbetrieb (MaD) der Kühlschmierstoffpumpe (74) definiert ist.

3. Werkzeugmaschine nach einem der voranstehenden Ansprüche , **dadurch gekennzeichnet, dass** die Rücklaufsteuerung (110) mit einer Maschinensteuerung (50) der Werkzeugmaschine gekoppelt ist und von dieser Kühlschmierstoffanforderungsinformationen erhält und dass insbesondere die Rücklaufsteuerung (110) die Rücklaufleitung (102) durch Öffnen des Rücklaufventils (104) aktiviert, wenn kein Kühlschmierstoff im Arbeitsraum (30) benötigt wird.

4. Werkzeugmaschine nach einem der voranstehenden Ansprüche, **dadurch gekennzeichnet, dass** die Rücklaufsteuerung (110) mit der Druckregelung (94) gekoppelt ist und von dieser Drehzahlinformationen (DI) zu der Kühlschmierstoffpumpe (74) erhält und dass insbesondere die Rücklaufsteuerung (110) die Rücklaufleitung (102) durch Öffnen des Rücklaufventils (104) aktiviert, wenn die Drehzahl der Kühlschmierstoffpumpe (74) in einem kritischen Bereich (KB) nahe der Minimaldrehzahl (MiD) liegt.

5. Verfahren zum Betreiben einer Werkzeugmaschine umfassend einen Arbeitsraum (30), in welchem ein Werkstückträger (16) zur Aufnahme eines Werkstücks (20) sowie mindestens ein Werkzeugträger (12, 14) mit mindestens einem Werkzeug (24, 26, 28) angeordnet und relativ zueinander bewegbar sind, sowie eine Kühlschmierstoffversorgungsanlage (70) für den Arbeitsraum (30) mit einem Kühlschmierstoffreservoir (72), mit einem Kühlschmierstoffverteilsystem (76) und mit einer drehzahlsteuerbaren Kühlschmierstoffpumpe (74), welche saugseitig mit dem Kühlschmierstoffreservoir (72) und druckseitig mit dem Kühlschmierstoffverteilsystem (76) verbunden ist,
wobei mit einem dem Kühlschmierstoffverteilsystem (76) zugeordneten Drucksensor (96) der Druck (PK) gemessen und einer Druckregelung (94) übermittelt wird, welche unter Berücksichtigung des von dem Drucksensor (96) gemessenen Drucks (PK) eine Drehzahl der Kühlschmierstoffpumpe (74) derart steuert, dass innerhalb eines definierten Regelbereichs (RB) in dem Kühlschmierstoffverteilsystem (76) ein der Drucksteuerung (94) vorgebbarer Referenzdruck (PR) im Kühlschmierstoffverteilsystem (76) aufrecht erhalten wird, wobei durch die Drucksteuerung (94) im Regelbereich (RB) die Drehzahl ausschließlich auf der Basis des von dem Drucksensor (96) gemessenen Drucks (PK) gesteuert wird, wobei eine Rücklaufleitung (102) von dem Kühlschmierstoffverteilsystem (76) zu dem Kühlschmierstoffreservoir (72) durch eine Rücklaufsteuerung (110) aktiviert oder deaktiviert wird und wobei die Rücklaufleitung (102) nur aktiviert wird, um die Kühlschmierstoffversorgungsanlage (70) in einem energiesuboptimalen Betriebsmodus zu betreiben, oder nur deaktiviert wird, um die Kühlschmierstoffversorgungsanlage (70) in einem rücklauffreien energieoptimalen Betriebsmodus zu betreiben, und wobei in der Rücklaufleitung mit einer Drossel (106) die diese durchlaufende Kühlschmierstoffmenge festgelegt wird.

6. Verfahren nach Anspruch 5, **dadurch gekennzeichnet, dass** der Regelbereich (RB) durch den Druck im Kühlschmierstoffverteilsystem (76) und die Drehzahl der Kühlschmierstoffpumpe (74) definiert wird.

7. Verfahren nach Anspruch 6, **dadurch gekennzeichnet, dass** eine Drehzahluntergrenze des Regelbereichs (RB) durch eine Mindestdrehzahl der Kühlschmierstoffpumpe (84) definiert wird.

8. Verfahren nach Anspruch 6 oder 7, **dadurch gekennzeichnet, dass** eine Drehzahlobergrenze des Regelbereiches (RB) durch eine Maximaldrehzahl für Dauerbetrieb (MaD) der Kühlschmierstoffpumpe (74) definiert wird.

9. Verfahren nach einem der Ansprüche 6 bis 8, **dadurch gekennzeichnet, dass** sich der Regelbereich (RB) über die Maximaldrehzahl für Dauerbetrieb (MaD) hinaus erstreckt, wenn die für die Regelung erforderliche Drehzahl der Kühlschmierstoffpumpe (74) die Maximaldrehzahl für Dauerbetrieb (MaD) für einen festgelegten Überlastzeitraum überschreitet und dass insbesondere nach Ablauf des festgelegten Überlastzeitraums der Regelbereich (RB) auf die Maximaldrehzahl für Dauerbetrieb (MaD) begrenzt wird.

10. Verfahren nach einem der Ansprüche 5 bis 9, **dadurch gekennzeichnet, dass** in der Rücklaufleitung mit einer Drossel (106) die diese durchlaufende Kühlschmierstoffmenge festgelegt wird und dass die Drossel (106) derart eingestellt wird, dass die Rücklaufleitung (102) bei einer Minimaldrehzahl (MiD) der Kühlschmierstoffpumpe (74) und Minimaldruck (MiP) im Kühlschmierstoffverteilsystem (76) die von der Kühlschmierstoffpumpe (74) geförderte Kühlschmierstoffmenge in das Kühlschmierstoffreservoir (72) zurückführt.

11. Verfahren nach einem der Ansprüche 5 bis 10, **dadurch gekennzeichnet, dass** der Rücklaufsteuerung (110) von einer Maschinensteuerung (50) der Werkzeugmaschine Kühlschmierstoffanforderungsinformationen übermittelt werden und dass insbesondere die Rücklaufsteuerung (110) die Rücklaufleitung (102) durch Öffnen des Rücklaufventils (104) aktiviert, wenn keine Kühlschmierstoffanforderung vorliegt.

12. Verfahren nach einem der Ansprüche 5 bis 11, **dadurch gekennzeichnet, dass** der Rücklaufsteuerung (110) von der Druckregelung (94) Drehzahlinformationen (DI) zu der Kühlschmierstoffpumpe (74) übermittelt werden und dass insbesondere die Rücklaufsteuerung (110) die Rücklaufleitung (102) durch Öffnen des Rücklaufventils (104) aktiviert, wenn die Drehzahl der Kühlschmierstoffpumpe (74) in einem kritischen Drehzahlbereich (KB) nahe der Minimaldrehzahl (MiD) arbeitet.

## Claims

1. Machine tool comprising a work space (30), a workpiece carrier (16) for accommodating a workpiece (20) as well as at least one tool carrier (12, 14) with at least one tool (24, 26, 28) being arranged and movable relative to one another in said work space, as well as comprising a lubricant supply device (70) for the work space (30) with a lubricant reservoir (72), a lubricant distributing system (76) and a lubricant pump (74) controllable by rotational speed and connected on the suction side to the lubricant reservoir (72) and on the pressure side to the lubricant distributing system (76),
wherein a pressure sensor (96) is associated with the lubricant distributing system (76) and interacts with a pressure control (94) for controlling the pressure (PK) in the lubricant distributing system (76), said pressure control controlling rotational speed of the lubricant pump (74), taking into consideration the pressure (PK) measured by the pressure sensor (96), in such a manner that a reference pressure (PR) specifiable to the pressure control (94) is maintained in the lubricant distributing system (76) within a defined control range (RB), wherein in the control range (RB) the pressure control (94) controls the rotational speed exclusively on the basis of the pressure (PK) measured by the pressure sensor (96), wherein a return flow line (102) is provided between the lubricant distributing system (76) and the lubricant reservoir (72), wherein a return flow valve (104) controllable by a return flow control (110) is provided in the return flow line (102) and wherein the return flow line (102) is only activatable with the return flow valve (104) to operate the lubricant supply system (70) in a suboptimal energy operating mode or deactivatable to operate the lubricant supply system (70) in a return-free, optimum energy operating mode and wherein a throttle (106) is provided in the return flow line.

2. Machine tool as defined in claim 1, **characterized in that** the control range (RB) is defined by the pressure in the lubricant distributing system (76) and the rotational speed of the lubricant pump (74), that a lower limit of the control range (RB) with respect to rotational speed is defined, in particular, by a minimum rotational speed of the lubricant pump (74) and that an upper limit of the control range (RB) with respect to rotational speed is defined, in particular, by a maximum rotational speed for continuous operation (MaD) of the lubricant pump (74).

3. Machine tool as defined in any one of the preceding claims, **characterized in that** the return flow control (110) is coupled to a machine control (50) of the machine tool and receives from it lubricant requirements information and that the return flow control (110) activates the return flow line (102), in particular, by opening the return flow valve (104) when no lubricant is required in the work space (30).

4. Machine tool as defined in any one of the preceding claims, **characterized in that** the return flow control (110) is coupled to the pressure control (94) and receives from it rotational speed information (DI) regarding the lubricant pump (74) and that the return flow control (110) activates the return flow line (102), in particular, by opening the return flow valve (104) when the rotational speed of the lubricant pump (74) is in a critical range (KB) close to the minimum rotational speed (MiD).

5. Method for operating a machine tool comprising a work space (30), a workpiece carrier (16) for accommodating a workpiece (20) as well as at least one tool carrier (12, 14) with at least one tool (24, 26, 28) being arranged and movable relative to one another in said work space, as well as a lubricant supply device (70) for the work space (30) with a lubricant reservoir (72), a lubricant distributing system (76) and a lubricant pump (74) controllable by rotational speed and connected on the suction side to the lubricant reservoir (72) and on the pressure side to the lubricant distributing system (76),
wherein the pressure (PK) is measured with a pressure sensor (96) associated with the lubricant distributing system (76) and communicated to a pressure control (94) controlling rotational speed of the lubricant pump (74), taking into consideration the pressure (PK) measured by the pressure sensor (96), in such a manner that a reference pressure (PR) specifiable to the pressure control (94) is maintained in the lubricant distributing system (76) within a defined control range (RB) in the lubricant distributing system (76), wherein in the control range (RB) the rotational speed is controlled by the pressure control (94) exclusively on the basis of the pressure (PK) measured by the pressure sensor (96), wherein a return flow line (102) from the lubricant distributing system (76) to the lubricant reservoir (72) is activated or deactivated by a return flow control (110) and wherein the return flow line (102) is only activated to operate the lubricant supply system (70) in a suboptimal energy operating mode or only deactivated to operate the lubricant supply system (70) in a return-free, optimum energy operating mode and wherein in the return flow line the amount of lubricant flowing through it is determined by a throttle (106).

6. Method as defined in claim 5, **characterized in that** the control range (RB) is defined by the pressure in the lubricant distributing system (76) and the rotational speed of the lubricant pump (74).

7. Method as defined in claim 6, **characterized in that** a lower limit of the control range (RB) with respect to rotational speed is defined by a minimum rotational speed of the lubricant pump (84).

8. Method as defined in claim 6 or 7, **characterized in that** an upper limit of the control range (RB) with respect to rotational speed is defined by a maximum rotational speed for continuous operation (MaD) of the lubricant pump (74).

9. Method as defined in any one of claims 6 to 8, **characterized in that** the control range (RB) extends beyond the maximum rotational speed for continuous operation (MaD) when the rotational speed of the lubricant pump (74) required for the control exceeds the maximum rotational speed for continuous operation (MaD) for a predetermined overload period of time and that after termination of the predetermined overload period of time the control range (RB) is limited, in particular, to the maximum rotational speed for continuous operation (MaD).

10. Method as defined in any one of claims 5 to 9, **characterized in that** in the return flow line with a throttle (106) the amount of lubricant flowing through it is predetermined and that the throttle (106) is set such that the return flow line (102) returns the amount of lubricant conveyed by the lubricant pump (74) to the lubricant reservoir (72) in the case of a minimum rotational speed (MiD) of the lubricant pump (74) and minimum pressure (MiP) in the lubricant distributing system (76).

11. Method as defined in any one of claims 5 to 10, **characterized in that** lubricant requirements information is communicated to the return flow control (110) by a machine control (50) of the machine tool and that the return flow control (110) activates the return flow line (102), in particular, by opening the return flow valve (104) when no lubricant is required.

12. Method as defined in any one of claims 5 to 11, **characterized in that** rotational speed information (DI) regarding the lubricant pump (74) is communicated to the return flow control (110) by the pressure control (94) and that the return flow control (110) activates the return flow line (102), in particular, by opening the return flow valve (104) when the rotational speed of the lubricant pump (74) is operating in a critical speed range (KB) close to the minimum rotational speed (MiD).

## Revendications

1. Machine-outil comprenant une chambre de travail (30) dans laquelle sont disposés un porte-pièce (16) destiné à recevoir une pièce à usiner (20) ainsi qu'au moins un porte-outil (12, 14) avec au moins un outil (24, 26, 28), mobiles l'un par rapport à l'autre, comprenant également un dispositif d'alimentation en lubrifiant (70) pour la chambre de travail (30) comprenant un réservoir à lubrifiant (72), un système de distribution de lubrifiant (76) et une pompe à lubrifiant (74) commandée en vitesse de rotation et reliée, côté aspiration, au réservoir à lubrifiant (72) et côté refoulement au système de distribution de lubrifiant (76),
dans laquelle un capteur de pression (96), qui coopère avec un régulateur de pression (94) destiné à la régulation de la pression (PK), est affecté au système de distribution de lubrifiant (76), lequel régulateur de pression, compte tenu de la pression (PK) mesurée par le capteur de pression (96), commande une vitesse de rotation de la pompe à lubrifiant (74) de manière à maintenir une pression de référence (PR) pouvant être prédéfinie pour la commande de pression (94) dans les limites d'une plage de réglage (RB) définie dans le système de distribution de lubrifiant (76),
dans laquelle le régulateur de pression (94) commande la vitesse de rotation, dans la plage de réglage (RB), exclusivement sur la base de la pression (PK) mesurée par le capteur de pression (96),
dans laquelle une conduite de retour (102) est prévue entre le système de distribution de lubrifiant (76) et le réservoir à lubrifiant (72),
dans laquelle une soupape de retour (104), pouvant être commandée par une commande de retour (110), est prévue dans la conduite de retour (102),
dans laquelle la conduite de retour (102) ne pouvant être activée par la soupape de retour (104) que pour faire fonctionner le dispositif d'alimentation en lubrifiant (70) dans un mode de fonctionnement suboptimal au plan énergétique, ou désactivée pour faire fonctionner le dispositif d'alimentation en lubrifiant (70) dans un mode de fonctionnement sans retour optimal au plan énergétique,
et dans laquelle un étranglement (106) étant prévu dans la conduite de retour.

2. Machine-outil selon la revendication 1, **caractérisée en ce que** la plage de réglage (RB) est définie par la pression dans le système de distribution de lubrifiant (76) et la vitesse de rotation de la pompe à lubrifiant (74), **en ce que**, en particulier, une limite inférieure de vitesse de rotation de la plage de réglage (RB) est définie par une vitesse de rotation minimale de la pompe à lubrifiant (74), et **en ce que**, en particulier, une limite supérieure de vitesse de rotation de la place de réglage (RB) est définie par une vitesse de rotation maximale pour le fonctionnement permanent (MaD) de la pompe à lubrifiant (74).

3. Machine-outil selon l'une quelconque des revendications précédentes, **caractérisée en ce que** la commande de retour (110) est couplée à une commande (50) de la machine-outil et reçoit de celle-ci des informations sur les demandes de lubrifiant et **en ce que**, en particulier, la commande de retour (110) active la conduite de retour (102) par l'ouverture de la soupape de retour (104) lorsqu'il n'y a pas de demande de lubrifiant dans la chambre de travail (30).

4. Machine-outil selon l'une quelconque des revendications précédentes, **caractérisée en ce que** la commande de retour (110) est couplée au régulateur de pression (94) et reçoit de celui-ci des informations sur la vitesse de rotation (DI) pour la pompe à lubrifiant (74), et **en ce que**, en particulier, la commande de retour (110) active la conduite de retour (102) par l'ouverture de la soupape de retour (104) lorsque la vitesse de rotation de la pompe à lubrifiant (74) se trouve dans une plage critique (KB) proche de la vitesse de rotation minimale (MiD).

5. Procédé pour le fonctionnement d'une machine-outil comprenant une chambre de travail (30) dans laquelle sont disposés un porte-pièce (16) destiné à recevoir une pièce à usiner (20) ainsi qu'au moins un porte-outil (12, 14) avec au moins un outil (24, 26, 28), mobiles l'un par rapport à l'autre, comprenant également un dispositif d'alimentation en lubrifiant (70) pour la chambre de travail (30) comprenant un réservoir à lubrifiant (72), un système de distribution de lubrifiant (76) et une pompe à lubrifiant (74) commandée en vitesse de rotation et reliée, côté aspiration, au réservoir à lubrifiant (72) et côté refoulement au système de distribution de lubrifiant (76),
dans lequel un capteur de pression (96), affecté au système de distribution de lubrifiant (76) mesure la pression (PK) et la transmet à un régulateur de pression (94) qui, compte tenu de la pression (PK) mesurée par le capteur de pression (96), commande une vitesse de rotation de la pompe à lubrifiant (74) de manière à maintenir une pression de référence (PR) pouvant être définie dans le système de distribution de lubrifiant (76) de la commande de pression (94) dans les limites d'une plage de réglage (RB) définie,
dans lequel le régulateur de pression (94) commande la vitesse de rotation, dans la plage de réglage (RB), exclusivement sur la base de la pression (PK) mesurée par le capteur de pression (96),
dans lequel une conduite de retour (102) qui va du système de distribution de lubrifiant (76) au réservoir à lubrifiant (72) est activée ou désactivée par une commande de retour (110),
dans lequel la conduite de retour (102) ne peut être activée que pour faire fonctionner le dispositif d'alimentation en lubrifiant (70) dans un mode de fonctionnement suboptimal au plan énergétique, ou uniquement désactivée pour faire fonctionner le dispositif d'alimentation en lubrifiant (70) dans un mode de fonctionnement sans retour optimal au plan énergétique, et dans lequel la conduite de retour comprend un étranglement (106) qui fixe la quantité de lubrifiant qui la traverse.

6. Procédé selon la revendication 5, **caractérisé en ce que** la plage de réglage (RB) est définie par la pression à l'intérieur du système de distribution de lubrifiant (76) et la vitesse de rotation de la pompe à lubrifiant (74).

7. Procédé selon la revendication 6, **caractérisé en ce qu'**une limite inférieure de vitesse de rotation de la plage de réglage (RB) est définie par une vitesse de rotation minimale de la pompe à lubrifiant (84).

8. Procédé selon la revendication 6 ou la revendication 7, **caractérisé en ce qu'**une limite supérieure de vitesse de rotation de la plage de réglage (RB) est définie par une vitesse de rotation maximale pour le fonctionnement permanent (MaD) de la pompe à lubrifiant (74).

9. Procédé selon l'une quelconque des revendications 6 à 8, **caractérisé en ce que** la plage de réglage (RB) s'étend au-delà de la vitesse de rotation maximale pour un fonctionnement permanent (MaD), lorsque la vitesse de rotation, nécessaire à la régulation, de la pompe à lubrifiant (74) dépasse la vitesse de rotation maximale pour un fonctionnement permanent (MaD) pour une période de surcharge définie, et **en ce que**, en particulier à l'issue de la période de surcharge définie, la plage de réglage (RB) est limitée à la vitesse de rotation maximale pour un fonctionnement permanent (MaD).

10. Procédé selon l'une quelconque des revendications 5 à 9, **caractérisé en ce que**, dans la conduite de retour la quantité de lubrifiant qui la traverse est fixeé par un étranglement (106), et **en ce que** l'étranglement (106) est réglé de telle manière que la conduite de retour (102) réachemine, vers le réservoir à lubrifiant (72), la quantité de lubrifiant acheminée par la pompe à lubrifiant (74) à une vitesse de rotation minimale (MiD) de la pompe à lubrifiant (74) et à une pression minimale (MiP) dans le système de distribution de lubrifiant (76).

11. Procédé selon l'une quelconque des revendications 5 à 10, **caractérisé en ce que** la commande de retour (110) reçoit des informations sur les besoins en lubrifiant d'une commande (50) de la machine-outil et **en ce que**, en particulier, la commande de retour (110) active la conduite de retour (102) par l'ouverture de la soupape de retour (104) lorsqu'il n'y a pas de demande de lubrifiant.

12. Procédé selon l'une quelconque des revendications 5 à 11, **caractérisé en ce que** la commande de retour (110) reçoit des informations sur la vitesse de rotation (DI) pour la pompe à lubrifiant (74) du régulateur de pression (94), et **en ce que**, en particulier, la commande de retour (110) active la conduite de retour (102) par l'ouverture de la soupape de retour (104) lorsque la vitesse de rotation de la pompe à lubrifiant (74) travaille dans une plage de vitesse de rotation critique (KB) proche de la vitesse de rotation minimale (MiD).
